# EUROPÄISCHE PATENTSCHRIFT

(11) **EP 2 024 143 B1**
(45) Veröffentlichungstag und Bekanntmachung des Hinweises auf die Patenterteilung: **30.06.2010**
(21) Anmeldenummer: 07725090.0
(22) Anmeldetag: 11.05.2007
(51) Int. Cl.: B25J 9/16

(54) **VORRICHTUNG UND VERFAHREN ZUM BEARBEITEN EINES ROBOTERSTEUERUNGSPROGRAMMS**
DEVICE AND METHOD FOR PROCESSING A ROBOT CONTROL PROGRAMME
DISPOSITIF ET PROCÉDÉ DE MODIFICATION D'UN PROGRAMME DE COMMANDE DE ROBOT

(30) Priorität: 13.05.2006 DE 102006022483
(43) Veröffentlichungstag der Anmeldung: 18.02.2009
(73) Patentinhaber: KUKA Roboter GmbH, 86165 Augsburg (DE)
(72) Erfinder: DITSCHER, Christof, 66851 Bann (DE); HUGGENBERGER, Ulrich, 86153 Augsburg (DE); STUMPFEGGER, Thomas, 86153 Augsburg (DE)
(74) Vertreter: Lempert, Jost
(86) Internationale Anmeldenummer: PCT/EP2007/004170
(87) Internationale Veröffentlichungsnummer: WO 2007/131711

(56) Entgegenhaltungen:
- JP-A- 6 099 377
- US-A- 5 937 143
- US-A1- 2006 025 890

## Beschreibung

Die Erfindung betrifft eine Vorrichtung zum Bearbeiten eines Robotersteuerungsprogramms nach dem Oberbegriff des Anspruchs 1 sowie ein entsprechendes Verfahren.

Mit Roboterbahn eines Roboters wird kurz die Bewegungsbahn des Zentrums eines mit dem Roboter verbundenen Werkzeugs, also des Tool-Center-Points (TCP) bezeichnet, während, soweit im Folgenden von der Position des Roboters selbst die Rede ist, die Position der Basis oder des Sockels des Roboters bzw. der Nullpunkt des Roboter- oder Weltkoordinatensystems relativ zur Bahn bezeichnet wird. Als Stützpunkte einer Roboterbahn bzw. eines Bahnverlaufs werden die Punkte im Bahnverlauf bezeichnet, die gelehrt ("geteached") oder offline-programmiert wurden und in der Regel als Stützpunkte zur Interpolation des Warenverlaufs zwischen diesen Punkten, beispielsweise im Rahmen einer Spline-Interpolation dienen.

Die JP 06099377 sieht vor, dass Roboter Track-Informationen in ein visuelles Bild konvertiert und auf einer Anzeigeeinheit eines Computersystem angezeigt werden, wobei ein Bewegungsbefehl eines Roboters auf der Basis eines Teaching-Punkts oder einer Kuppe eines solchen Punkte, die auf der Anzeige angegeben sind, erzeugt wird, und der Befehl zu dem Robotersystem übertragen wird, wobei die gegenwärtige Position des Roboters von diesem erhalten wird und die gegenwärtige Position in einer Bildebene der Anzeigeeinheit wiedergegeben wird. Hiermit soll im Rahmen eines Verfahren zum Lehren eines Roboterverlaufs Verlaufsinformationen mit geringen Fehlern effektiv erzeugt werden, um so die Belastung eines Benutzers beim Eingeben und Edditieren von dem Roboterverlauf entsprechenden Informationen so weit als möglich zu reduzieren.

Die US 2006/0025890 offenbart ein Verfahren zum Bearbeiten eines Robotersteuerungsprogramms, wobei eine Richtung durch einen Startpunkt und senkrecht zum Bahnverlauf dargestellt wird und ggf. die Orientierung des Roboterwerkzeugs korrigiert wird.

Die EP 0 852 346 schützt eine Vorrichtung zum Anzeigen eines Roboterprogramms, mit einer Speichereinrichtung zum Speichern des Roboterprogramms, einer Anzeigeeinrichtung auf der eine Position mit einer Zeigereinrichtung bezeichnet werden kann und mit einer Verarbeitungseinrichtung zum Anzeigen eines Arbeitsintervalls und eines Luftdurchschneideintervalls als aufeinanderfolgende Linien unter Darstellung an einer der Linien, wenn diese durch die Zeigereinrichtung bezeichnet wird, wobei die Darstellung einem Befehl für einen Arbeitsvorgang in dem Roboterprogramm in Verbindung mit der einen der angezeigten Linien entspricht.

Beim Einsatz von Industrierobotern kommt es häufig vor, dass Daten von Stützpunkten eines bestehenden Robotersteuerungsprogramms - oder kurz: Roboterprogramms geändert werden müssen. Dies kann aus einer geänderten Anforderung an ein bestehendes Roboterprogramm resultieren, z.B. wenn das zu bearbeitende Bauteil geringfügig modifiziert wurde. Häufig müssen Punktdaten aber auch angepasst werden, um eine geforderte Taktzeit zu erreichen. Diese Punktkorrekturen werden in der Regel "Online", d.h. während das Roboterprogramm abgearbeitet wird, vorgenommen.

Um eine solche "Online-Korrektur" eines Punktes im Raum durchzuführen, wird vom Roboterbediener die Kenntnis eines Bezugssystems vorausgesetzt. Im einfachsten Fall ist dies das Weltkoordinatensystem des Roboters. Häufig wird aber auch ein (externes) Werkzeug- oder ein anderweitig definiertes Koordinatensystem verwendet. Relativ zu diesem kann dann eine Punktkorrektur vorgenommen werden, dabei muss der Anwender jedoch die eigentliche Korrekturrichtung und Korrekturgröße des Punktes bezogen auf die Roboterbahn in entsprechenden X-, Y- und Z-Werte des lokalen Bezugsystems umrechnen.

Die einzugebenden Korrekturwerte sind für den Bediener kaum intuitiv zu bestimmen, da das Bezugsystem am zu korrigierenden Punkt nicht sichtbar ist. In der Praxis werden meist mehrere Iterationen zur Anpassung der X-, Y- und Z-Werte benötigt, um die gewünschte Punktkorrektur exakt zu erreichen. Es ist offensichtlich, dass dieses Verfahren durch seine anfängliche Ungenauigkeit ein großes Fehlerpotential beinhaltet.

Es ist schon bekannt, graphisch dargestellte Bahnpunkte mittels eines optischen Systems, wie eines Lichtschnittsensors zu erfassen, wobei eine Anpassung von Bahnpunkten des Roboterprogramms durch graphisches Editieren erfolgt und für Änderungen graphische 2D-Darstellungen in eine 3D-Positionsänderung zurückgerechnet und in das Roboterprogramm übertragen werden. Dabei wird allerdings dem Anwender keinerlei Unterstützung hinsichtlich der Einordnung und Orientierung eines zu editierenden Bahnpunktes im Verlauf der Roboterbahn gegeben.

Der Erfindung liegt die Aufgabe zugrunde, unter Vermeidung der genannten Nachteile einem Anwender Hilfsmittels zu einer intuitiven Korrektur der Roboterbahn zur Hand zu geben und ihm eine einfache Online-Korrektur zu ermöglichen, so dass er ohne mehrmaliges Nachbessern den Ort eines ausgewählten Stützpunktes verändern kann.

Erfindungsgemäß wird die genannte Aufgabe gelöst durch eine Vorrichtung der eingangs genannten Art, die die kennzeichnen den Merkmale des Anspruchs 1 aufweist. Zur Lösung der genannten Aufgabe sieht die Erfindung weiterhin ein Verfahren der eingangs genannten Art gemäß dem Anspruch 11 vor.

Durch die Erfindung werden Bahn- oder Stützpunkte aus dem Roboterprogramm ausgelesen und dem Anwender zur Online-Anpassung mittels graphischer Hilfselemente angegeben, so dass eine Veränderung durch graphisch orientiertes Editieren erfolgen kann. Dem Anwender wird so das Umrechnen zwischen unterschiedlichen Koordinatensystem abgenommen, was zu einer deutlichen Reduzierung der Roboterbedienkomplizität führt. Der Anwender findet sich durch die erfindungsgemäß vorgesehenen Hilfsmittel in einer für ihn vertrauten Welt wieder.

Der Bahnverlauf wird in bevorzugter Ausgestaltung als Tangente der Roboterbahn im Stützpunkt dargestellt, wodurch eine einfache und übersichtliche Darstellung gegeben ist.

Zur Auswahl eines zu korrigierenden Stützpunktes sieht die Erfindung in Weiterbildung vor, dass zunächst der Verlauf der Roboterbahn in einer Hauptebene eines Kartesischen Koordinatensystems und/oder in einer gewählten Ebene dargestellt wird. Um eine Auswahl zu präzisieren und gegebenenfalls in der Darstellung des gesamten Bahnverlaufes nicht unterschieden oder diskriminierte Stützpunkte unterschreiten zu können, ist in Weiterbildung vorgesehen, dass die Darstellung des Bahnverlaufs vergrößerbar ist.

Erfindungsgemäß ist insbesondere vorgesehen, dass ein Verschieben der dargestellten Kreisscheibe in Richtung ihrer Flächennormale eine Verschiebung des Stützpunktes auf der programmierten Bahn im Robotersteuerungsprogramm bewirkt, dass ein Drehen des Pfeils in der Ebene der Kreisscheibe um ihre Flächennormale die Korrekturrichtung in einer zur programmierten Bahn senkrechten Ebene bestimmt und/oder dass ein Verschieben des dargestellten Stützpunktes entlang des Pfeils ein zur Richtung der programmierten Bahn senkrechtes Versetzen des Stützpunktes im Robotersteuerungsprogramm bewirkt. Die erfindungsgemäße Vorrichtung ist vorzugsweise in entsprechender Weise ausgebildet.

Damit der Anwender auch rein intuitiv die Position des Roboters relativ zum Bahnverlauf erfassen kann, ist vorgesehen, dass diese ebenfalls graphisch dargestellt wird, wobei die Position des Roboters relativ zum Bahnverlauf dargestellt wird.

Die erfindungsgemäße Vorrichtung ist zur Wiedergabe der vorstehenden Darstellung und graphischen Repräsentationen ausgebildet.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnungen im einzelnen erläutert ist. Dabei zeigt:
- Fig. 1: eine schematische Darstellung der erfindungs- gemäßen Vorrichtung;
- Fig. 2: eine Darstellung zur Anzeige eines lokalen Bereichs einer Roboterbahn zur Unterstützung der Änderung des Ortes eines Stützpunktes;
- Fig. 3: eine Ausgangsdarstellung zur Auswahl eines mit Hilfe der Darstellung der Fig. 1 in sei- nem Ort zu korrigierenden Stützpunktes;
- Fig. 4: der Darstellung entsprechend Fig. 1 mit ver- größertem Bahnverlauf; und
- Fig. 5a, 5b: Darstellungen zum Einsatz der erfindungsgemä- ßen Vorrichtung zur Darstellung des erfin- dungsgemäßen Verfahrens.

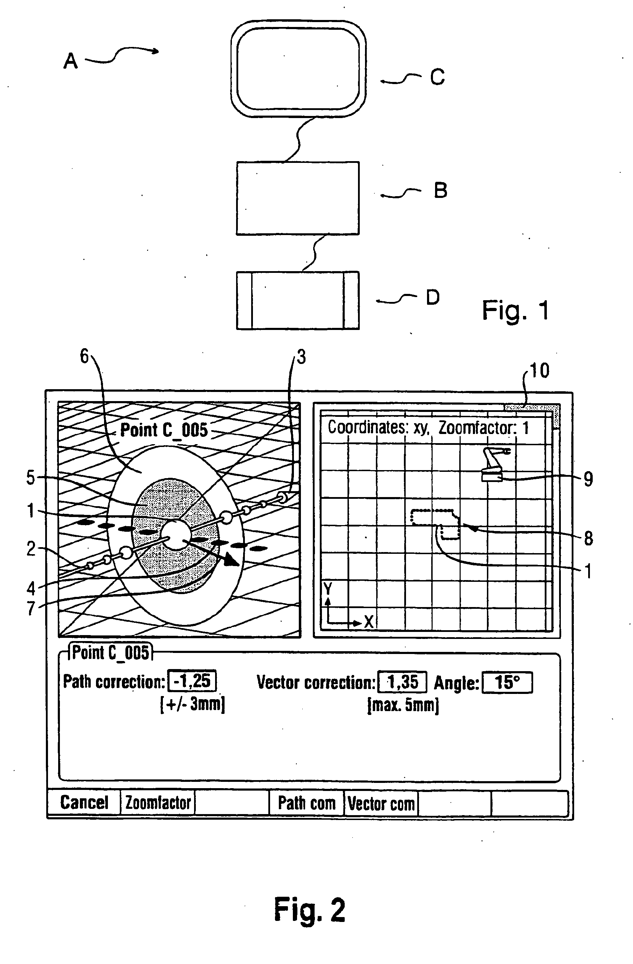

Die erfindungsgemäße Vorrichtung A weist im Wesentlichen eine Verarbeitungseinrichtung (Rechner) B, eine Anzeigeeinrichtung C und mindestens eine Eingabeeinrichtung D, wie eine Tastatur auf (Fig. 1).

Zur Erleichterung der Korrektur, insbesondere der Online-Korrektur des Stützpunktes, wie er beispielsweise zur Interpolation des Bahnverlaufs mittels eines Spline-Verfahrens erforderlich ist und in der Regel geteacht oder aber offline programmiert wurde, so sieht die Erfindung zunächst die Darstellung eines zu ändernden Punktes und zusätzlich zu diesem als weiteres Hilfsmittels zunächst eine Repräsentation für den Bahnverlauf durch den Punkt 1, im dargestellten Ausführungsbeispiel in Form einer Tangente 2 zum Bahnverlauf durch den Punkt 1 vor (Fig. 2). Die Bewegungsrichtung wird durch eine Pfeilspitze 3 am Ende der Tangente 2 angezeigt.

Als weitere Orientierungshilfe wird eine Hilfslinie 4, hier eine gestrichelte Linie, durch den zu korrigierenden Stützpunkt 1 in einem rechten Winkel zum Bahnverlauf bzw. der diesen repräsentierenden Tangente 2 und in der Korrekturebene dargestellt. Diese Hilfslinie 4 bildet auch einen "künstlichen Horizont". Zur Veranschaulichung der Ebene senkrecht zum Bahnverlauf bzw. der Tangente 2 wird eine innere Kreisfläche 5 durch den Stützpunkt 1, in der also die gestrichelte Hilfslinie 4 liegt, und einen die Fläche 5 umgebenden Kreisring 6 dargestellt. Die dargestellten Elemente 1 bis 6 können farblich unterschiedlich ausgestaltet sein. Die Kreisscheibe 5 um den Stützpunkt 1 kann insbesondere die Korrekturgrenzen angeben, innerhalb derer eine Korrektur des Ortes des Stützpunktes, dessen Ort zu korrigieren ist, vorgenommen werden kann. Im dargestellten Ausführungsbeispiel ist weiterhin mit 7 ein Pfeil wiedergegeben, der die unter einem Winkel von beispielsweise 15° zur Hilfslinie 4 ausgerichtete Korrekturrichtung der gewünschten Ortskorrektur repräsentiert.

Die gewünschte Korrektur kann über zugeordnete Tasten oder als Zahlenwerte in der unteren Hälfte der Darstellung der Fig. 1 eingegeben werden oder aber durch übliche Eingabe mit Hilfe eines Computer-Eingabemittels, wie einer Computermaus, indem der Anfangspunkt des Pfeils 7 entlang der Tangente 2 und der Endpunkt des Pfeils 7 auf der Kreisdarstellung 5, 6 bewegt wird. Im unteren Wiedergabefeld finden sich maximale Korrekturwerte für die Wegkorrektur entlang des Bahnverlaufs bzw. der Tangente 2 mit im dargestellten Ausführungsbeispiel ± 3mm sowie senkrecht hierzu mit maximal 5mm, während der Winkel frei in der gesamten Ebene der Scheiben 5, 6 gewählt werden kann.

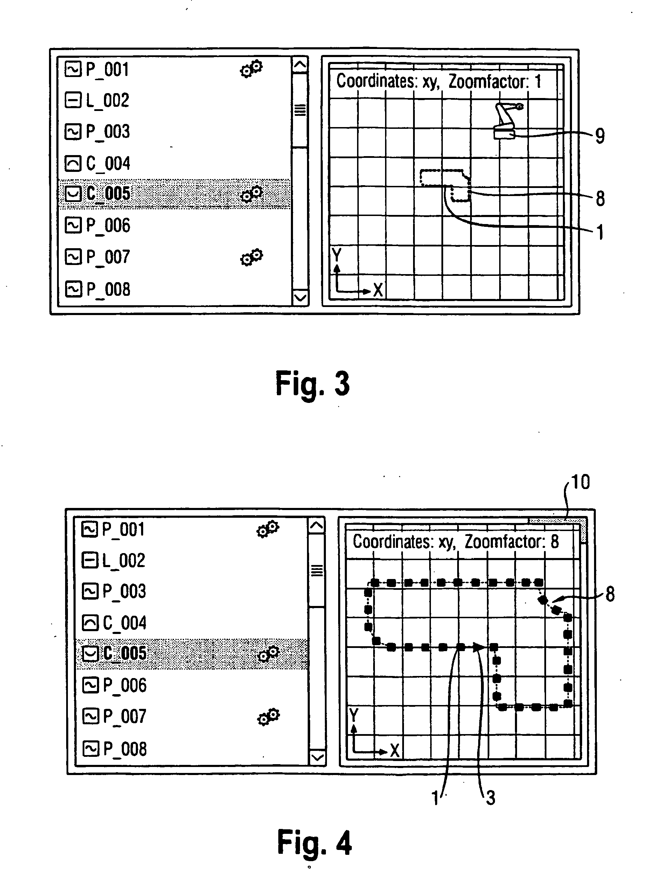

Die Auswahl des zu korrigierenden Stützpunktes kann entsprechend den Darstellungen der Fig. 3 und 4 vorgenommen werden.

Die rechte obere Fensterdarstellung in Fig. 2 zeigt den Bahnverlauf 8 in der ausgewählten Korrekturebene, hier in der X-Y-Ebene eines kartesischen Koordinatensystems, wie in der linken unteren Ecke dieser Fensterdarstellung angegeben ist. Auf dem Bahnverlauf wird der in Fig. 2 im linken Fensterteil aus einer Punkteliste angewählte, zu korrigierende Stützpunkt 1 (Fig. 2), der beispielhaft mit C_005 bezeichnet ist, ausgewählt und hervorgehoben. Weiterhin ist die Position des Roboters 9 durch eine schematische Darstellung eines solchen relativ zum Bahnverlauf 8 dargestellt.

Die Darstellung des Bahnverlaufes kann vergrößert werden, wie dies in der Fig. 3 dargestellt ist. Bei einer solchen Vergrößerung kann weiterhin die Bewegungsrichtung durch einen Pfeil 3 entsprechend der Fig. 2 wiedergegeben werden. Der Ort des Roboters 9 relativ zum Bahnverlauf 8 wird bei der vergrößerten Darstellung der Fig. 3 durch eine Markierung 10 am Rande des Darstellungsbereichs repräsentiert. Je nach relativer Orientierung des Ortes des Roboters zum Bahnverlauf 8 kann die Markierung um den Darstellungsbereich für den Bahnverlauf 8 wandern, sich also auch an einem anderen Ort als in der Fig. 3 dargestellt, befinden.

Die Erfindung unterstützt die Arbeitsweise eines Anwenders zur Korrektur eines Stützpunktes oder mehrerer Stützpunkte der Bewegungsbahn eines Roboters in folgender Weise: Zunächst ruft der Anwender gemäß der Fig. 3 die symbolische Darstellung (linke Hälfte) und graphische Darstellung des Bahnverlaufs 8 mit den einzelnen Stützpunkten auf. Sodann wählt er einen Stützpunkt 1, sei es in der symbolischen Wiedergabe links, sei es auf dem graphischen Bahnverlauf rechts aus. Er kann sodann eine Vergrößerung des Bahnverlaufs durch Zoomen vornehmen. Weiterhin ist es möglich, den Bahnverlauf nicht nur in der wiedergegebenen X-Y-Ebene des kartesischen Koordinatensystems, sondern auch in anderen Hauptebene eines solchen oder in anderen gewünschten Ebenen darzustellen, je nachdem welche Repräsentation zur Korrektur des Ortes eines Stützpunktes die geeignetste ist.

Gegebenenfalls kann dann eine Vergrößerung der Darstellung des Bahnverlaufs 8 vorgenommen werden, um einen anderen als den zunächst ausgewählten Stützpunkt zur Korrektur auszuwählen, wenn sich dies bei der vergrößerten Darstellung als notwendig oder geeigneter erscheint. Sodann erfolgt eine Umschaltung von der linken symbolischen Darstellung auf die graphische Darstellung im linken Bereich der Fig. 2 und der Anwender kann dann in der oben beschriebenen Weise eine Korrektur des Ortes des ausgewählten Stützpunktes 1 vornehmen.

Da die zweidimensionale Wiedergabe im rechten Bereich der Fig. 2 bis 4 eine Projektion des Bahnverlaufs auf die entsprechende Koordinatenebene beinhaltet, ist nicht auszuschließen, dass ein in dieser Wiedergabe befindlicher Punkt tatsächlich zwei Stützpunkte in einem Bahnverlauf repräsentiert bzw. diese in der Wiedergabe nicht mehr zu unterscheiden bzw. zu diskriminieren sind. Ist dies der Fall, so wird bei der Darstellung der Fig. 1 die Pfeilspitze 3 nicht mit angezeigt, was dem Anwender anzeigt, dass der dort dargestellte Bahnstützpunkt 1 nicht eindeutig ist und ihm einen Hinweis gibt, eine andere Ebene als Darstellungs- bzw. Projektionsebene auszuwählen, bei der die beiden fraglichen Punkte unterscheidbar sind.

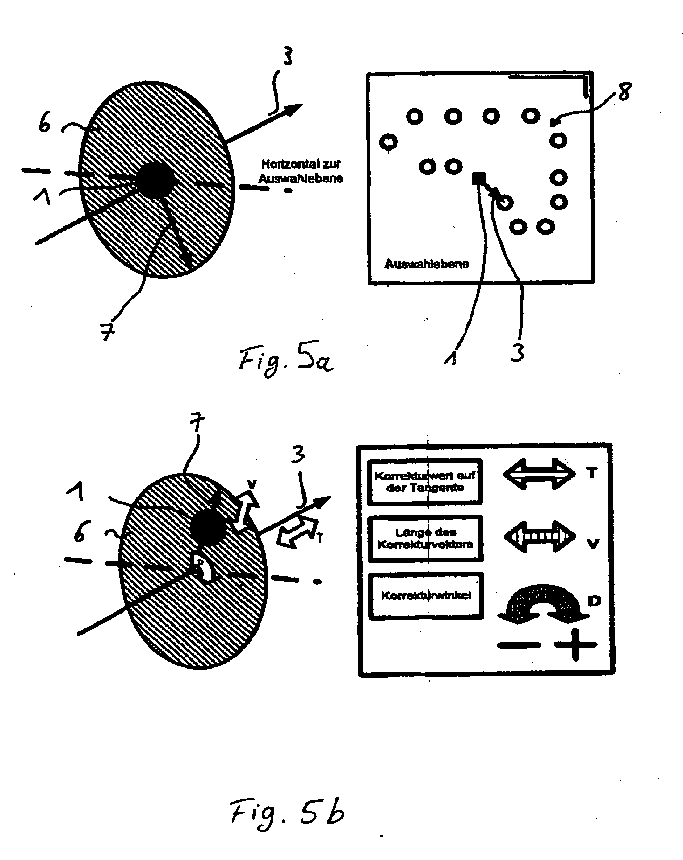

Die Scheibe 6 der Fig. 5a und 5b stellt schematisch den Toleranzbereich für eine Korrektur dar. Der Pfeil 7 auf der Scheibe 6 symbolisiert lediglich die Korrektureinrichtung. Die Länge des Pfeils variiert nicht.

Nach einer Korrektur wandert in der Grafik der mittlere Punkt 1 auf dem Pfeil 7 (Scheibe) nach außen. Die Mitte der Scheibe 6 stellt den Nominalpunkt dar. Die Korrekturwerte werden in Offsetdaten, mit Bezug auf den Nominalpunkt abgespeichert. Der Scheibenrand stellt somit die Toleranzgrenze der Korrektur dar.

Eine Korrektur erfolgt durch farblich zugeordnete oder sonst unterschiedener Pfeile. Hierzu weist die erfindungsgemäße Vorrichtung jeweils eine + und eine - Taste pro Korrekturrichtung auf. Zudem ist eine numerische Eingabe ebenfalls möglich.

### Bezugszeichenliste

- 1: Stützpunkt
- 2: Tangente, Bahnverlauf
- 3: Pfeilspitze
- 4: Hilfslinie
- 5: Kreisscheibe, Scheibe
- 6: Außenring, Scheibe
- 7: Pfeil
- 8: Bahnverlauf
- 9: Roboter
- 10: Markierung

- A: Vorrichtung
- B: Verarbeitungseinrichtung
- C: Anzeigeeinrichtung
- D: Eingabeeinrichtung

## Patentansprüche

1. Vorrichtung zum Bearbeiten eines Robotersteuerungsprogramms mit einer Einrichtung zum Anzeigen zumindest eines lokalen Bereichs einer Roboterbahn eines Roboters zur Unterstützung einer Änderung eines Ortes eines Stützpunktes der Roboterbahn, mit einer Einrichtung bestimmt zum Darstellen des zu ändernden Stützpunktes (1), des Bahnverlaufs (2) durch diesen und zumindert einer Richtung (4) durch den Stützpunkt (1) senkrecht zum Bahnverlauf (2) und mit einer Einrichtung zum Verändern des Bahnverlaufs, **dadurch gekennzeichnet, dass** die Vorrichtung zur Bestimmung der Korrekturrichtung in einer zur programmierten Bahn senkrechten Ebene durch ein Drehen eines eine Korrekturrichtung anzeigenden Pfeils (7) in der Ebene senkrecht (5, 6) zum Bahnverlauf (2) um die Flächennormale der Ebene ausgebildet ist.

2. Vorrichtung nach Anspruch 1, **gekennzeichnet durch** Darstellung des Bahnverlauf als Tangente (2) der Roboterbahn im Stützpunkt (1).

3. Vorrichtung nach Anspruch 1 oder 2, **gekennzeichnet durch** Ausbildung zur Darstellung einer Ebene (5,6) senkrecht zum Bahnverlauf (2).

4. Vorrichtung nach Anspruch 3, **gekennzeichnet durch** Ausbildung zur Darstellung der Ebene mindestens als Kreisscheibe (5).

5. Vorrichtung nach einem der Ansprüche 1 bis 4, **gekennzeichnet durch** Ausbildung zur vergrößerten Darstellung des Verlaufs der Roboterbahn (3) in einer Hauptebene eines kartesischen Koordinatensystems und/oder in einer gewählten Ebene.

6. Vorrichtung nach Anspruch 5, **gekennzeichnet durch** Ausbildung zur vergrößerten Darstellung des Bahnverlaufs (8) .

7. Vorrichtung nach Anspruch 5 oder 6, **gekennzeichnet durch** Ausbildung zur Darstellung der Position des Roboters (9) relativ zum Bahnverlauf (8).

8. Vorrichtung nach einem der Ansprüche 5 bis 7, **gekennzeichnet durch** Ausbildung zur Darstellung der Richtung der relativen Position des Roboters (9) zum Bahnverlauf **durch** eine Markierung (10) am Rand des Darstellungsbereichs.

9. Vorrichtung nach einem der Ansprüche 1 bis 8, **dadurch gekennzeichnet, dass** sie zum Verschieben des Stützpunktes auf der programmierten Bahn im Robotersteuerungsprogramm hin ausgebildet ist.

10. Vorrichtung nach einem der Ansprüche 1 bis 9, **dadurch gekennzeichnet, dass** sie zum zur Richtung der programmierten Bahn senkrechten Versetzen des Stützpunktes im Robotersteuerungsprogramm durch ein Verschieben des dargestellten Stützpunktes entlang des Pfeils hin ausgebildet ist.

11. Verfahren zum Bearbeiten eines Robotersteuerungsprogramms, wobei zumindest ein lokaler Bereich einer von dem Roboterprogramm vorgesehenen Roboterbahn eines Roboters zur Unterstützung einer Änderung eines Ortes eines Stützpunktes der Roboterbahn, angepasst wird, wobei der zu ändernde Stützpunkt und der Bahnverlauf durch diesen dargestellt werden und wobei nach Ändern von dargestellten Elementen der Roboterbahn das Roboterprogramm automatisch entsprechend angepasst wird, **dadurch gekennzeichnet, dass** mindestens eine Richtung durch den Stützpunkt senkrecht zum Bahnverlauf dargestellt wird.

12. Verfahren nach Anspruch 11, **dadurch gekennzeichnet, dass** der Bahnverlauf als Tangente der Roboterbahn im Stützpunkt dargestellt wird.

13. Verfahren nach Anspruch 11 oder 12, **dadurch gekennzeichnet, dass** eine Ebene senkrecht zum Bahnverlauf dargestellt wird.

14. Verfahren nach Anspruch 13, **dadurch gekennzeichnet, dass** die Ebene mindestens als Kreisscheibe dargestellt wird.

15. Verfahren nach einem der Ansprüche 11 bis 14, **dadurch gekennzeichnet, dass** der Verlauf der Roboterbahn in einer Hauptebene eines Kartesischen Koordinatensystems und/oder in einer gewählten Ebene dargestellt wird.

16. Verfahren nach Anspruch 15, **dadurch gekennzeichnet, dass** die Darstellung des Bahnverlaufs vergrößerbar ist.

17. Verfahren nach Anspruch 15 oder 16, **dadurch gekennzeichnet, dass** die Position des Roboters relativ zum Bahnverlauf dargestellt wird.

18. Verfahren nach einem der Ansprüche 15 bis 17, **dadurch gekennzeichnet, dass** die Richtung der relativen Position des Roboters zum Bahnverlauf durch eine Markierung am Rand des Darstellungsbereichs dargestellt wird.

19. Verfahren nach einem der Ansprüche 11 bis 18, **dadurch gekennzeichnet, dass** ein Verschieben der dargestellten Kreisscheibe in Richtung ihrer Flächennormale eine Verschiebung des Stützpunktes auf der programmierten Bahn im Robotersteuerungsprogramm bewirkt.

20. Verfahren nach einem der Ansprüche 11 bis 19, **dadurch gekennzeichnet, dass** ein Drehen des Pfeils in der Ebene der Kreisscheibe um ihre Flächennormale die Korrekturrichtung in einer zur programmierten Bahn senkrechten Ebene bestimmt.

21. Verfahren nach einem der Ansprüche 11 bis 20, **dadurch gekennzeichnet, dass** ein Verschieben des dargestellten Stützpunktes entlang des Pfeils ein zur Richtung der programmierten Bahn senkrechtes Versetzen des Stützpunktes im Robotersteuerungsprogramm bewirkt.

## Claims

1. A device for executing a robot control program, having a means for displaying at least one local region of a robot path of a robot to assist in a change of location of an interpolation point of the robot path, having a means intended for displaying the interpolation point (1) to be changed, the trajectory (2) therethrough and at least one direction (4) through the interpolation point (1) perpendicular to the trajectory (2), and having a means for changing the trajectory, **characterised in that** the device for determining the correction direction in a plane perpendicular to the programmed path is formed by turning an arrow (7) indicating a correction direction in the plane (5, 6) perpendicular to the trajectory (2) about the surface normal of the plane.

2. A device according to claim 1, **characterised by** display of the trajectory as a tangent (2) to the robot path in the interpolation point (1).

3. A device according to claim 1 or claim 2, **characterised by** being configured to display a plane (5, 6) perpendicular to the trajectory (2).

4. A device according to claim 3, **characterised by** being configured to display the plane at least as a circular disc (5).

5. A device according to any one of claims 1 to 4, **characterised by** being configured for magnified display of the trajectory of the robot path (3) in a main plane of a Cartesian system of coordinates and/or in a selected plane.

6. A device according to claim 5, **characterised by** being configured for magnified display of the trajectory (8).

7. A device according to claim 5 or claim 6, **characterised by** being configured to display the position of the robot (9) relative to the trajectory (8).

8. A device according to any one of claims 5 to 7, **characterised by** being configured to display the direction of the relative position of the robot (9) to the trajectory by marking (10) at the edge of the display area.

9. A device according to any one of claims 1 to 8, **characterised in that** it is designed to displace the interpolation point on the programmed path in the robot control program.

10. A device according to any one of claims 1 to 9, **characterised in that** it is designed for shifting the interpolation point in the robot control program perpendicularly to the direction of the programmed path by displacement of the displayed interpolation point in the direction of the arrow.

11. A method of executing a robot control program, at least one local region of a robot path, provided by the robot program, of a robot being adjusted to assist in a change of location of an interpolation point of the robot path, the interpolation point to be changed and the trajectory therethrough being displayed and the robot program being automatically adjusted appropriately after the change to displayed elements of the robot path, **characterised in that** at least one direction through the interpolation point perpendicular to the trajectory is displayed.

12. A method according to claim 11, **characterised in that** the trajectory is displayed as a tangent to the robot path in the interpolation point.

13. A method according to claim 11 or claim 12, **characterised in that** a plane perpendicular to the trajectory is displayed.

14. A method according to claim 13, **characterised in that** the plane is displayed at least as a circular disc.

15. A method according to any one of claims 11 to 14, **characterised in that** the trajectory of the robot path is displayed in a main plane of a Cartesian system of coordinates and/or in a selected plane.

16. A method according to claim 15, **characterised in that** the trajectory display may be magnified.

17. A method according to claim 15 or claim 16, **characterised in that** the position of the robot relative to the trajectory is displayed.

18. A method according to any one of claims 15 to 17, **characterised in that** the direction of the relative position of the robot to the trajectory is displayed by marking at the edge of the display area.

19. A method according to any one of claims 11 to 18, **characterised in that** displacement of the displayed circular disc in the direction of the surface normal thereof effects displacement of the interpolation point on the programmed path in the robot control programme.

20. A method according to any one of claims 11 to 19, **characterised in that** turning of the arrow in the plane of the circular disc about the surface normal thereof determines the correction direction in a plane perpendicular to the programmed path.

21. A method according to any one of claims 11 to 20, **characterised in that** displacement of the displayed interpolation point along the arrow effects a shift, perpendicular to the direction of the programmed path, of the interpolation point in the robot control program.

## Revendications

1. Dispositif d'élaboration d'un programme de commande de robot avec un dispositif d'affichage d'au moins une zone locale d'une trajectoire de robot d'un robot pour soutenir un changement d'emplacement d'un point d'appui de la trajectoire de robot, avec un dispositif défini pour représenter le point d'appui (1) à modifier ainsi que la courbe de trajectoire (2) le traversant et au moins une direction (4) traversant le point d'appui (1) perpendiculairement à la courbe de trajectoire (2) et avec un dispositif de modification de la courbe de trajectoire, **caractérisé en ce que** le dispositif de détermination de la direction de correction est réalisé dans un plan perpendiculaire à la trajectoire programmée par pivotement d'une flèche (7) orientée dans la direction de correction, dans le plan (5, 6) perpendiculairement à la courbe de trajectoire (2), autour de la normale superficielle du plan.

2. Dispositif selon la revendication 1, **caractérisé par** la représentation de la courbe de trajectoire sous la forme d'une tangente (2) de la trajectoire de robot dans le point d'appui (1).

3. Dispositif selon la revendication 1 ou 2, **caractérisé par** l'apprentissage par représentation d'un plan (5, 6) perpendiculaire à la courbe de trajectoire (2).

4. Dispositif selon la revendication 3, **caractérisé par** l'apprentissage par représentation du plan au moins sous la forme d'un disque circulaire (5).

5. Dispositif selon l'une quelconque des revendications 1 à 4, **caractérisé par** l'apprentissage par représentation agrandie de la courbe de la trajectoire de robot (3) dans un plan principal d'un système de coordonnées cartésien et/ou dans un plan choisi.

6. Dispositif selon la revendication 5, **caractérisé par** l'apprentissage par représentation agrandie de la courbe de trajectoire (8).

7. Dispositif selon la revendication 5 ou 6, **caractérisé par** l'apprentissage par représentation de la position du robot (9) par rapport à la courbe de trajectoire (8).

8. Dispositif selon l'une quelconque des revendications 5 à 7, **caractérisé par** l'apprentissage par représentation de la direction de la position relative du robot (9) par rapport à la courbe de trajectoire à l'aide d'un marquage (10) au niveau du bord de la zone de représentation.

9. Dispositif selon l'une quelconque des revendications 1 à 8, **caractérisé en ce qu'**il est réalisé par un déplacement du point d'appui en direction de la trajectoire programmée dans le programme de commande de robot.

10. Dispositif selon l'une quelconque des revendications 1 à 9, **caractérisé en ce qu'**il est réalisé par un déplacement du point d'appui le long de la flèche pour décaler le point d'appui perpendiculairement à la direction de la trajectoire programmée dans le programme de commande de robot.

11. Procédé d'élaboration d'un programme de commande de robot, au moins une zone locale d'une trajectoire de robot d'un robot pourvu du programme de robot étant adaptée pour soutenir une modification d'emplacement d'un point d'appui de la trajectoire de robot, le point d'appui à modifier ainsi que la courbe de trajectoire le traversant étant représentés et le programme de robot étant automatiquement adapté de façon correspondante après modification des éléments représentés de la trajectoire de robot, **caractérisé en ce qu'**au moins une direction est représentée à travers le point d'appui perpendiculaire à la courbe de trajectoire.

12. Procédé selon la revendication 11, **caractérisé en ce que** la courbe de trajectoire est représentée dans le point d'appui sous la forme d'une tangente de la trajectoire de robot.

13. Procédé selon la revendication 11 ou 12, **caractérisé en ce qu'**un plan est représenté perpendiculairement à la courbe de trajectoire.

14. Procédé selon la revendication 13, **caractérisé en ce que** le plan est représenté au moins sous la forme d'un disque circulaire.

15. Procédé selon l'une quelconque des revendications 11 à 14, **caractérisé en ce que** la courbe de la trajectoire de robot est représentée dans un plan principal d'un système de coordonnées cartésien et/ou dans un plan choisi.

16. Procédé selon la revendication 15, **caractérisé en ce que** la représentation de la courbe de trajectoire peut être agrandie.

17. Procédé selon la revendication 15 ou 16, **caractérisé en ce que** la position du robot est représentée par rapport à la courbe de trajectoire.

18. Procédé selon l'une quelconque des revendications 15 à 17, **caractérisé en ce que** la direction de la position relative du robot par rapport à la courbe de trajectoire est représentée par un marquage au niveau du bord de la zone de représentation.

19. Procédé selon l'une quelconque des revendications 11 à 18, **caractérisé en ce qu'**un déplacement du disque circulaire représenté en direction de sa normale superficielle a pour effet un déplacement du point d'appui sur la trajectoire programmée dans le programme de commande de robot.

20. Procédé selon l'une quelconque des revendications 11 à 19, **caractérisé en ce qu'**un pivotement de la flèche dans le plan du disque circulaire autour de sa normale superficielle détermine la direction de correction dans un plan perpendiculaire à la trajectoire programmée.

21. Procédé selon l'une quelconque des revendications 11 à 20, **caractérisé en ce qu'**un déplacement du point d'appui représenté le long de la flèche a pour effet un décalage du point d'appui perpendiculairement à la direction de la trajectoire programmée dans le programme de commande de robot.
